# EUROPÄISCHE PATENTSCHRIFT

(11) **EP 1 332 466 B1**
(45) Veröffentlichungstag und Bekanntmachung des Hinweises auf die Patenterteilung: **18.08.2004**
(21) Anmeldenummer: 01993901.6
(22) Anmeldetag: 09.11.2001
(51) Int. Cl.: G06K 15/00, G03G 15/00

(54) **VERFAHREN ZUM ÜBERWACHEN VON MINDESTENS EINEM DRUCKPARAMETER EINES DRUCKERS UND DRUCKSYSTEM**
METHOD FOR MONITORING AT LEAST ONE PRINTING PARAMETER AND PRINTING SYSTEM
PROCEDE POUR SURVEILLER AU MOINS UN PARAMETRE DE PRESSION D'UNE IMPRIMANTE ET SYSTEME D'IMPRESSION

(30) Priorität: 11.11.2000 DE 10056060
(43) Veröffentlichungstag der Anmeldung: 06.08.2003
(73) Patentinhaber: Best GmbH, 47803 Krefeld (DE)
(72) Erfinder: SCHUPPAN, Holger, 46242 Bottrop (DE)
(74) Vertreter: Viering, Jentschura & Partner
(86) Internationale Anmeldenummer: PCT/DE2001/004178
(87) Internationale Veröffentlichungsnummer: WO 2002/039374

(56) Entgegenhaltungen:
- EP-A- 0 575 169
- EP-A- 0 964 330
- EP-A- 1 003 327
- US-A- 5 999 761

## Beschreibung

In der heutigen Zeit werden zunehmend zu druckende Daten in digitaler Form über große Entfernungen mit Hilfe von Datenübertragungsmedien wie z.B. Telefonleitungen, Richtfunkoder Satellitenverbindungen übertragen.

Der Zweck dieser Übertragung ist der Ausdruck der übertragenen Daten bei einem Drucker als Empfänger.

Es liegt in der Absicht des Senders, d.h. einer Sendeanordnung, die drucktechnische Wiedergabe beim Drucker als Empfänger so zu gestalten, dass sie mit der Version des Senders, d.h. der Version, wie sie in der Sendeanordnung vorliegt, so genau wie möglich übereinstimmt.

Gemäß dem Stand der Technik ist beispielsweise eine Bestätigung über den ordnungsgemäßen Empfang der Daten auf der Empfängerseite vorgesehen.

Eine derartige Vorrichtung ist jedoch nicht geeignet, die Übereinstimmung eines Ausdrucks auf Empfängerseite mit einem gewünschten Ausdruck unabhängig von den Druckbedingungen auf der Empfängerseite zu gewährleisten.

Aus EP 1 003 327 A2 sind eine Informationsverarbeitungsvorrichtung sowie ein Druckersteuerverfahren bekannt, wobei ein Drucker mit einem Dichtemeßabschnitt zum Messen von aktuellen Dichtewerten, die zum Kalibrieren des Druckers verwendet werden, versehen ist. Die Kalibrierungsinformation wird an einen Steuerabschnitt des Druckers übertragen, von dem die Druckdaten unter Berücksichtigung der gemessenen Dichtewerte entsprechend modifiziert werden.

Ferner ist aus US 5,999,761 eine Bilderzeugungsvorrichtung beispielsweise in Form eines Laserdruckers bekannt, die einen Sensor zur Erkennung und Auswertung des Druckergebnisses aufweist, so daß der Drucker veränderte Umweltbedingungen erkennen und entsprechen berücksichtigen kann.

Bei derartigen Vorrichtungen besteht jedoch das Problem, daß bei großer räumlicher Entfernung zwischen dem Drucker und der Datenquelle keinerlei Kontrolle über die Übereinstimmung eines Ausdrucks auf der Empfängerseite mit einem Ausdruck auf der Senderseite besteht.

Auch wenn sowohl die Sendeanordnung als auch der Drucker die gleichen Daten verwenden, so gibt es noch verschiedene Möglichkeiten, warum beide Ausdrucke voneinander verschieden sein können, z.B.
- verschieden kalibrierte Drucker,
- verschiedene Druckmaterialien, im Weiteren als Druckmedium bezeichnet, oder
- Fehler beim Ausdruck.

Deshalb ist es dem Sender bisher unmöglich, die Übereinstimmung eines Ausdrucks mit einem gewünschten Ausdruck zu gewährleisten.

Somit liegt der Erfindung das Problem zugrunde, einen Ausdruck in verbesserter Weise über ein Kommunikationsnetz so zu überwachen, daß die Übereinstimmung eines Ausdruckes auf Empfängerseite mit einem gewünschten Ausdruck unabhängig von den Druckbedingungen auf Empfängerseite gewährleistet ist.

Diese Aufgabe wird durch den Gegenstand des unabhängigen Patentanspruchs 1 bzw. 10 gelöst.

Bei einem Verfahren zum Überwachen von mindestens einem Druckparameter eines Druckers wird der Druckparameter erfaßt.

Unter einem Druckparameter ist im Weiteren ein Parameter zu verstehen, der den Druck des Druckers charakterisiert, beispielsweise
- die Existenz von Druckmaterial (eines Druckmediums) in dem Drucker;
- die Geschwindigkeit und/oder die Richtung des Transports des Druckmediums in dem Drucker;
- die ausreichende Übereinstimmung der Farbwiedergabe auf dem Druckmedium mit einer vorgegebenen Soll-Farbwiedergabe;
- die Homogenität der ausgedruckten Information.

Der Druckparameter kann auch aus zumindest einem Teil der oben genannten Parameter ermittelt werden, beispielsweise mittels einer Bearbeitung der Parameter, um aus diesen Metaparameter zu gewinnen, die einen komprimierten Informationsgehalt verglichen mit den oben genannten Parametern aufweisen.

Der erfaßte Druckparameter wird zu einer Druckparameter-Nachricht codiert, beispielsweise gemäß einem vorgegebenen Kommunikationsprotokoll, vorzugsweise gemäß dem Transport Control Protocol (TCP) und/oder dem Internet Protocol (IP).

Grundsätzlich können erfindungsgemäß eine beliebige Anzahl von Druckparametern ermittelt werden und zu einer oder mehreren Druckparameter-Nachrichten codiert werden.

Die Druckparameter-Nachricht wird in einem weiteren Schritt von dem ersten Drucker zu einer Steuerungsanordnung über ein Kommunikationsnetz, beispielsweise einem Kommunikationsfestnetz oder einem Mobilfunknetz, übertragen. Alternativ kann das Kommunikationsnetz auch ein lokales Kommunikationsnetz sein (Local Area Network, LAN). Im Rahmen der Übertragung der Druckparameter-Nachricht kann ein beliebiges Kommunikationsprotokoll eingesetzt werden.

Nach erfolgter Übertragung wird die von der Steuerungsanordnung empfangene Druckpärameter-Nachricht decodiert. Mittels der Decodierung wird der in der Druckparameter-Nachricht enthaltene Druckparameter von der Steuerungsanordnung ermittelt und ist damit zentral in der Steuerungsanordnung verfügbar.

Von der Steuerungsanordnung wird der Druckparameter überwacht. Die Steuerungsanordnung ist beispielsweise ein zentraler Steuerrechner, der über das Kommunikationsnetz mit dem ersten Drucker gekoppelt ist.

Die Überwachung kann beispielsweise erfolgen, indem ein vorgegebener Soll-Verlauf des Druckparameters über die Zeit überwacht wird. Alternativ kann die Überwachung ein Schwellwertvergleich sein, abhängig von dessen Ergebnis eine entsprechende Aktion ausgelöst wird.

Abhängig von dem Druckparameter kann von der Steuerungsanordnung eine Steuerungsanweisung erzeugt werden zum Steuern des ersten Druckers. Die Steuerungsanweisung kann von der Steuerungsanordnung codiert werden zu einer Steuerungsanweisungs-Nachricht, vorzugsweise gemäß dem schon zur Codierung der Druckparameter-Nachricht verwendeten Kommunikationsprotokoll. Gemäß dieser Ausgestaltung der Erfindung wird die Steuerungsanweisungs-Nachricht über das Kommunikationsnetz zu dem ersten Drucker übertragen. Die Steuerungsanweisungs-Nachricht wird von dem ersten Drucker empfangen und von diesem decodiert, womit die Steuerungsanweisung ermittelt wird. Anschließend wird der ersten Drucker gemäß der ermittelten Steuerungsanweisung gesteuert, d.h. es werden einzelne Komponenten, beispielsweise der Antriebsmotor zum Erzeugen des Vorschubs des Druckmediums, die Druckdüsen, etc. angesteuert.

Durch diese Ausgestaltung der Erfindung wird der Sender digitaler Daten, d.h. die Steuerungsanordnung, in die Lage versetzt, nicht nur den ordnungsgemäßen Empfang seiner gesendeten Druckdaten zu kontrollieren, sondern auch den ordnungsgemäßen Ausdruck derselben auf einem Drucker beim Empfänger zu kontrollieren und sogar zu steuern.

Gemäß einer weiteren Ausgestaltung der Erfindung wird der Druckparameter mit einem vorgegebenen Kriterium verglichen und die Steuerungsanweisung wird abhängig von dem Vergleichsergebnis erzeugt. So kann beispielsweise die Farbzusammensetzung der von dem ersten Drucker auf das Druckmedium gedruckten Farbe mittels der Steuerungsanordnung gesteuert werden oder auch der ersten Drucker hinsichtlich weiterer Aspekte kalibriert, allgemein eingestellt, werden.

Der durch den Druckparameter charakterisierte Druck des ersten Druckers erfolgt aufgrund von Druckdaten, die mittels einer Sendeanordnung über das Kommunikationssystem übertragen wurden. Die Sendeanordnung kann insbesondere die Steuerungsanordnung aufweisen.

Die Druckdaten werden vor der Übertragung an den Drucker mittels eines zweiten Druckers ausgedruckt und anhand dieses Ausdrucks wird ein vorgegebenes Kriterium für den Vergleich des Druckerparameters bestimmt.

Vorzugsweise hängt das vorgegebene Kriterium von wenigstens einem Soll-Wert ab, der aus der folgenden Gruppe ausgewählt wird:
- ein Transport-Soll-Wert bezüglich der Geschwindigkeit und/oder des Transports des Druckmaterials in dem ersten Drucker;
- ein Farb-Soll-Wert bezüglich der farbmetrischen Übereinstimmung der Farbwiedergabe auf dem Druckmaterial mit einer vorgegebene Soll-Wiedergabe; und
- ein Homogenitäts-Soll-Wert bezüglich der Homogenität der ausgedruckten Information.

Der Vergleich des Druckerparameters mit dem vorgegebenen Kriterium wird vorzugsweise von der Steuerungsanordnung durchgeführt. Alternativ kann der Vergleich auch in dem ersten Drucker selbst in Form eines abzuarbeitenden Computerprogramms realisiert sein und das Vergleichsergebnis wird in diesem Fall als Druckparameter an die Steuerungsanordnung übertragen.

Die codierte Information kann über das Internet/Intranet als Kommunikationsnetz übertragen werden.

Weiterhin ist ein Drucksystem vorgesehen mit einer Steuerungsanordnung und mindestens einem ersten Drucker, die über ein Kommunikationsnetz miteinander verbunden sind, bei dem der erste Drucker folgende Komponenten aufweist:
- eine Sensoranordnung mit mindestens einem Sensor zum Erfassen mindestens eines Druckparameters,
- eine mit der Sensoranordnung gekoppelte Codiereinheit zum Codieren des Druckparameters zu einer Druckparameter-Nachricht,
- eine Daten-Sendeeinheit, die mit dem Kommunikationsnetz verbunden ist, zum Senden der Druckparameter-Nachricht,
- bei dem die Steuerungsanordnung folgende Komponenten aufweist:
   - eine Daten-Empfangseinheit, die mit dem Kommunikationsnetz verbunden ist, zum Empfangen der Druckparameter-Nachricht,
   - eine Decodiereinheit zum Decodieren der Druckparameter-Nachricht,
   - eine mit der Decodiereinheit gekoppelte Druckparameter-Überwachungseinheit zum Überwachen des empfangenen Druckparameters;
   - wobei das Drucksystem einen zweiten Drucker zum Ausdrucken der von einer Sendeanordnung zum ersten Drucker übertragenen Druckdaten vor deren Übertragung über das Kommunikationsnetz und eine weitere Sensoranordnung zum Ermitteln von Soll-Werten anhand des von dem zweiten Drucker erzeugten Ausdrucks aufweist.

Die Steuerungsanordnung kann zusätzlich folgende Komponenten aufweisen:
- eine Steuerungsanweisungs-Erzeugungseinheit, mit der abhängig von mindestens einem empfangenen Druckparameter eine Steuerungsanweisung erzeugt wird zum Steuern des ersten Druckers,
- wobei die Codiereinheit eingerichtet ist zum Codieren einer Steuerungsanweisungs-Nachricht aus der Steuerungsanweisung, und
- eine Daten-Sendeanordnung, die mit dem Kommunikationsnetz verbunden ist, zum Senden der Steuerungsanweisungs-Nachricht.

Vorzugsweise ist eine Vergleichseinheit zum Vergleichen der Soll-Werte mit dem Druckerparameter vorgesehen.

Gemäß einer weiteren Ausgestaltung der Erfindung weist der Drucker folgende Komponenten auf:
- eine Daten-Empfangseinheit, die mit dem Kommunikationsnetz verbunden ist, zum Empfangen der Steuerungsanweisungs-Nachricht,
- wobei die Decodiereinheit eingerichtet ist zu Decodieren der Steuerungsanweisungs-Nachricht zu der Steuerungsanweisung, und
- eine Drucker-Steuerungseinheit zum Steuern des ersten Druckers abhängig von der Steuerungsanweisung.

Weiterhin kann der erste Drucker eine Drucker-Steuerungseinheit aufweisen zum Steuern des Druckers gemäß einem vorgegebenen Steuerungsablauf.

Gemäß einer Weiterbildung der Erfindung ist eine Sensor-Steuerungseinheit vorgesehen zum Steuern der Sensoranordnung gemäß einem vorgegebenen Steuerungsablauf.

Die Drucker-Steuerungseinheit und die Sensor-Steuerungseinheit können gemeinsam in einer Steuereinheit realisiert sein.

Die Steuerungseinheit kann die Messwerte der Sensoren aufnehmen, vorverarbeiten und die Ergebnisse über ein geeignetes Übertragungsmedium zum Sender der Druckdaten übermitteln.

Dies kann auf eine solche Weise geschehen, dass der erste Drucker Kontrolldaten auf dem Ausdruck (z.B. in einem Randbereich des Druckmediums) unterbringt, die dann über die Sensoren gemessen und von der Steuereinheit oder einem angeschlossenen Computer oder dem Sender selbst in einem Soll-Ist Vergleich verifiziert werden.

Weiterhin kann die Sensoranordnung mindestens einen der folgenden Sensoren aufweisen,
- mindestens einen Drehgeber zum Ermitteln der Transportgeschwindigkeit und/oder der Transportrichtung und/oder der Transportstrecke des Druckmediums in dem ersten Drucker,
- mindestens einen Farbsensor, und/oder
- mindestens einen Bildsensor.

Gemäß dieser Ausgestaltung der Erfindung ist es vorteilhaft, in einem handelsüblichen Drucker schon vorhandene Sensoren zu verwenden, wodurch eine erhebliche Kosteneinsparung erzielt wird.

Die Sensoren der Sensoranordnung müssen nicht am Druckkopf des Druckers befestigt sein. Sie sollten an einer Stelle innerhalb des Druckers befestigt sein, an der das bedruckte Material den Drehgeber bewegen kann und gleichzeitig der Farbsensor Farbmessungen durchführen sowie der Bildsensor Bildaufnahmen machen kann.

Der Drehgeber ist vorzugsweise auf geeignete Weise derart mit dem zu bedruckenden Material verbunden, dass er die Richtung und die Geschwindigkeit der Bewegung desselben zu messen in der Lage ist.

Weiterhin ist der Farbsensor derart eingerichtet, dass er durch farbmetrische Messung die Farbe, die das zu bedruckende Material (das Druckmedium) an der zu messenden Stelle aufweist, mit einer hinreichenden Genauigkeit zu messen in der Lage ist (vorzugsweise mittels spektralphotometrischer Messung).

Der Bildsensor kann in Verbindung mit einer geeigneten Optik und einer Bildauswerteoptik verbunden sein, so dass diese Einheit in der Lage ist, das Druckbild auf ungewollte Inhomogenitäten zu untersuchen, um so beispielsweise verstopfte Düsen am Druckkopf eines Tintenstrahldruckers zu erkennen.

Anschaulich kann die Erfindung in einer Fernüberwachung eines Ausdrucks auf einem Drucker gesehen werden, wobei an dem Drucker eine Steuerungseinheit angebracht werden kann, die wiederum mit einem spektralphotometrisch arbeitenden Farbsensor, mit einem Drehgeber und/oder einem Bildsensor gekoppelt sein kann, und die eine Schnittstelle besitzt, um über einen an dieser Schnittstelle über ein Kommunikationsnetz, im einfachsten Fall einem Kabel, angeschlossenen Computer oder direkt über Datenübertragungsmedien wie einem Kommunikationsnetzwerk oder dem Internet überwacht zu werden.

Durch die Erfindung wird somit erstmals eine Fernüberwachung eines Druckers insbesondere hinsichtlich der den Druck charakterisierenden Druckparameter möglich.

Durch Ausrüstung eines Druckers mittels geeigneter Sensoren, welche den Drucker in bezug auf Materialtransport, gedruckte Farbwerte und Druckbild kontrollieren, und durch Übertragung dieser Daten als Druckparameter zurück zum Sender, d.h. der Steuerungsanordnung, ist es nunmehr möglich, die Übereinstimmung eines Ausdrucks von dem Drucker, der vom Steuerungsanordnung entfernt angeordnet ist, mit dem von der Steuerungsanordnung beabsichtigten Ausdruck (Soll-Ausdruck) zu kontrollieren.

Die Erfindung wird nachstehend anhand von in den beigefügten Abbildungen dargestellten Ausführungsbeispielen näher erläutert.

Es zeigen:
- Figur 1: ein Blockdiagramm, in dem ein Drucksystem gemäß einem Ausführungsbeispiel der Erfindung dargestellt ist;
- Figur 2: ein Blockdiagramm, in dem ein Drucksystem gemäß einem weiteren bevorzugten Ausführungsbeispiel dargestellt ist, mittels dem ein Vergleich zwischen Ausdrucken auf Sender- und Empfängerseite realisierbar ist;
- Figur 3: ein Blockdiagramm, in dem ein Drucksystem gemäß einer weiteren bevorzugten Ausführungsform dargestellt ist.

Ein Drucksystem 100 weist einen Drucker 101, grundsätzlich eine beliebige Anzahl von Druckern 101, auf. Der Drucker 101 ist mit einem Kommunikationsnetz 102 gekoppelt, gemäß diesem Ausführungsbeispiel dem Internet/Intranet und darüber mit einem Steuerrechner 103 als Steuerungsanordnung, der ebenfalls mit dem Kommunikationsnetz 102 gekoppelt ist.

Der Drucker 101 weist auf
- eine Sende-/Empfangseinheit 104,
- eine mit der Sende-/Empfangseinheit 104 gekoppelte Decodier-/Codiereinheit 105,
- eine mit der Decodier-/Codiereinheit 105 gekoppelte Steuerungseinheit 106, sowie
- eine mit der Steuerungseinheit 106 gekoppelte Sensoranordnung 107.

Die Sensoranordnung 107 weist drei jeweils mit der Steuerungseinheit 106 gekoppelte Sensoren 108, 109, 110 auf, nämlich
- einen Drehgeber 108,
- einen Farbsensor 109, sowie
- einen Bildsensor 110.

In diesem Zusammenhang ist darauf hinzuweisen, dass für den Fall, dass der Farbsensor 109 ausreichend genau arbeitet, auf den Bildsensor 110 verzichtet werden kann, weil ein Ausfall einer oder mehrerer Düsen des Druckers 101 auch durch eine Farbänderung auf dem Druckmedium festgestellt werden kann.

Alternativ kann der Drucker 101 als ein Monochromdrucker ausgestaltet sein, so dass in diesem Fall auf den Farbsensor 109 verzichtet werden kann.

Der Drehgeber 108 ist auf geeignete Weise derart mit dem zu bedruckenden Material verbunden, dass er die Richtung und die Geschwindigkeit der Bewegung des Materials in dem Drucker 101 messen kann.

Der Drehgeber 108 gemäß diesem Ausführungsbeispiel ist ein handelsübliches Bauteil, welches derart eingerichtet ist, dass es in der Lage ist, bei Vorhandensein einer Drehbewegung eine Folge von elektrischen Signalen zu erzeugen. Aus der Art und der Geschwindigkeit dieser Signale werden die Richtung und die Geschwindigkeit der Drehbewegung ermittelt.

Der Drehgeber 108 weist eine Welle zum Übertragen der Drehbewegung auf, eine auf dieser Welle angebrachte Scheibe mit entsprechenden Schlitzen darin und einen Sensor, der mit Hilfe einer Lichtschranke beim Durchlaufen eines solchen Schlitzes durch die Lichtschranke einen elektrischen Impuls erzeugt.

Vorzugsweise werden zwei Lichtschranken in einem Drehgeber 108 derart in dem Drucker 101 angeordnet, dass die von ihnen erzeugten Impulse eine Phasenverschiebung aufweisen. Hierzu können alternativ, jedoch weniger bevorzugt, auch zwei Drehgeber verwendet werden. Aus dem Vorzeichen der Phasenverschiebung kann dann die Drehrichtung des Druckmediums in dem Drucker 101 abgeleitet werden.

Um mit Hilfe des Drehgebers 108 Rückschlüsse auf die Materialbewegung ziehen zu können, wird die in dem Drehgeber 108 enthaltene Welle wird mit einem Rad gekoppelt, das auf das durch den Drucker 101 laufende Druckmedium gepresst wird.

Das Rad ist mit einem gummiartigen Überzug versehen, um eine bessere Reibung zum Druckmedium hin zu gewährleisten. Der Anpressdruck wird so gewählt, dass kein Schlupf zwischen Rad und dem Druckmedium auftritt und gleichzeitig das Druckmedium in seiner normalen Bewegung nicht behindert wird.

Durch geeignete Anordnung der weiteren Sensoren 109, 110 und ihre Kopplung mit dem Rad ist es erfindungsgemäß auch möglich, das Rad zum Einstellen eines konstanten Abstands zwischen den Sensoren und dem Druckmedium zu verwenden, unabhängig von der Materialdicke des verwendeten Druckmediums.

Die an den Drehgeber 108 angeschlossene Steuereinheit 106 kann durch Zählung der Anzahl der ihr von dem Drehgeber 108 pro Zeiteinheit zugeführten Impulse und durch Vergleich der Phasenlage beider Signale folgende Informationen gewinnen:
- die Geschwindigkeit des Druckmediums in dem Drucker 101 (aus der Anzahl der Impulse pro Zeiteinheit und aus der Kenntnis des Radumfangs);
- die Richtung des Materialtransports, d.h. des Transports des Druckmediums in dem Drucker 101 (aus der Phasenlage beider Signale);
- die zurückgelegte Wegstrecke, d.h. der bisherige Materialverbrauch (Anzahl der Impulse und Radumfang)

Unter Zusammenwirken mit den weiteren Sensoren 109, 110 der Sensoranordnung 107 kann die Steuereinheit 106 beispielsweise Farbmessungen am besten dann durchführen lassen, wenn das zu bedruckende Material gerade in dem Drucker zum Stillstand gekommen ist. Auf diese Weise wird eine höhere Genauigkeit der Farbmessung unter Verwendung des Farbsensors 109 und des Drehgebers 108 erreicht.

Die auf das Druckmedium mittels des Druckers 101 aufgebrachte Farbe wird mittels einer spektralphotometrischen Messungen unter Verwendung des Farbsensors 109 hinreichend genau gemessen.

Gemäß diesem Ausführungsbeispiel wird deshalb ein spektralphotometrisch arbeitender Farbsensor 109 verwendet.

Der spektralphotometrisch arbeitende Farbsensor 109 ist derart eingerichtet, dass er in der Lage ist, die Intensität des von einer Vorlage, dem Druckmedium, reflektierten Lichts bei verschiedenen Wellenlängen zu messen.

Diese Einzelintensitäten werden dann gemäß einer Vorschrift (beispielsweise gemäß DIN 5033) zur Berechnung der resultierenden Farbe im XYZ-Farbraum verwendet.

Für den gemäß diesem Ausführungsbeispiel verwendeten Farbsensor 109 ist es vorteilhaft, dass dieser eine möglichst kompakte Bauform aufweist und, soweit möglich, eine eigene Lichtquelle zur Beleuchtung des zu messenden Bereichs auf dem Druckmedium besitzt, um von einer externen Beleuchtung unabhängig zu sein.

Weiterhin ist es vorteilhaft, dass sich die Vorlage in einem konstanten Abstand vom Farbsensor 109 befindet, um konstante Messbedingungen zu gewährleisten, auch wenn sich beispielsweise die Dicke des Druckmediums ändert.

Dies lässt sich beispielsweise dadurch erreichen, dass der Farbsensor 109 fest mit dem Rad des oben beschriebenen Drehgebers 108 gekuppelt wird, welches auf der Materialoberfläche des Druckmediums läuft und so einen definierten und konstanten Abstand zwischen Oberfläche des Druckmediums und der Achse besitzt.

Als Bildsensor 110 wird gemäß diesem Ausführungsbeispiel ein zweidimensionales Array aus lichtempfindlichen Zellen auf CCD-Basis oder CMOS-Basis verwendet, wie es beispielsweise auch in einer digitalen Kamera verwendet wird.

Der Bildsensor 110 ist eingerichtet, um das Druckbild auf ungewünschte Inhomogenitäten zu untersuchen, um so beispielsweise verstopfte Düsen am Druckkopf des Druckers, vorzugsweise eines Tintenstrahldruckers, zu ermitteln.

In Verbindung mit einer geeigneten Optik können so mikroskopische Aufnahmen der bedruckten Bereiche auf dem Druckmedium gemacht werden.

Eine in dem Drucker 101 oder in dem Steuerrechner 103 vorgesehene geeignete Bildauswerteeinheit (nicht dargestellt) kann in Verbindung mit entsprechend entworfenen Testmustern folgende Zustände feststellen:
- die Betriebsbereitschaft bzw. der Ausfall einzelner Düsen der Druckköpfe des Druckers 101,
- die Korrektheit der horizontalen und vertikalen Ausrichtung der Druckköpfe des Druckers 101,
- der Betrag der Abweichung der horizontalen und vertikalen Ausrichtung der Druckköpfe des Druckers 101, falls keine korrekte Ausrichtung der Druckköpfe des Druckers 101 vorliegt,
- der Geradeauslauf des Druckmediums in dem Drucker 101.

Die Bildauswertung kann somit direkt in der an die Sensoranordnung 107 angeschlossenen Steuereinheit 106 erfolgen, so dass nur die Ergebnisse dieser Auswertung an den Steuerrechner 103 übermittelt werden.

Eine andere Möglichkeit besteht darin, die Bilddaten zur Auswertung komplett zu verschicken, d.h. an den Steuerrechner 103 zu übertragen, in komprimierter oder unkomprimierter Form.

Die Steuerungseinheit 106 hat folgende Aufgaben:
- die Steuerung, Überwachung und Koordination der Sensoren 108, 109, 110; das bedeutet, dass die Steuerungseinheit 106 beispielsweise durch Überwachung des Drehgebers 108 feststellt, um welche Wegstrecke sich das Druckmedium bewegt hat, um auf diese Weise an äquidistanten vorgebbaren Positionen eine Farbmessung durch den Farbsensor 108 und eine Aufnahme durch den Bildsensor 109 auszulösen, d.h. zu starten; ebenfalls durch Auswertung der Drehgebersignale kann die Steuerungseinheit 106 ein Fehlverhalten des Druckers 101, z.B. ein zu schnelles und/oder ein ständiges Abrollen des Druckmediums, feststellen;
- die Aufbereitung der durch diese Sensoren 108, 109, 110, übertragenen Ergebnisse, beispielsweise durch eine Vorverarbeitung der Daten (z.B. Filterung, Mittelwertbildung, statistische Analyse, etc.); durch Überwachung des Farbsensors 109 kann die Steuerungseinheit 106 den Beginn des Teststreifens auf dem Druckmedium erkennen, wenn dieser durch eine bestimmte vorgegebene Farbe codiert wird; das gleiche kann über den Bildsensor 110 erfolgen, wenn man den Beginn des Teststreifens durch ein bestimmtes Muster kennzeichnet; die Steuerungseinheit 106 kann die durch die Sensoren 108, 109, 110 gelieferten Daten auf die für den Nutzer relevante Menge reduzieren, d.h. gemäß einem beliebigen vorgegebenen Komprimierungsverfahren komprimieren. Außerdem kann die Steuerungseinheit 106 durch die Kombination von Daten, die zeitgleich von zwei oder drei Sensoren 108, 109, 110 erzeugt und von der Steuerungseinheit 106 empfangen werden, neue Informationen gewinnen, beispielsweise durch Verknüpfung (Addition, Subtraktion, Korrelation, etc.) der jeweils erhaltenen Sensorsignale.
- die Kommunikation mit dem Steuerrechner 103, der den Drucker 101 steuert, über die Decodier-/Codiereinheit 105 sowie die Sende-/Empfangseinheit 104 des Druckers 101, wie im Weiteren noch näher erläutert wird; die Steuerungseinheit 106 kommuniziert über eine Schnittstelle, gemäß diesem Ausführungsbeispiel gebildet durch die Decodier-/Codiereinheit 105 sowie die Sende/Empfangseinheit 104 des Druckers 101, alternativ z.B. über einen Netzwerkanschluss, über das Internet, über eine serielle oder parallele Schnittstelle, mit einem angeschlossenen Computer, dem Steuerrechner 103; dieser ist in der Lage, Informationen von der Steuerungseinheit 106 zu erhalten und auszuwerten, bestimmte Zustände oder Aktionen (z.B. Zurücksetzen, Initialisieren) in der Steuerungseinheit 106 auszulösen sowie die gemessenen Werte mit den Soll-Werten oder mit Werten einer vorherigen Messung zu vergleichen.

Der Steuerrechner 103 ist mit dem Kommunikationsnetz 102 gekoppelt und weist auf
- eine Sende-/Empfangseinheit 111,
- eine mit der Sende-/Empfangseinheit 111 gekoppelte Decodier-/Codiereinheit 112, sowie
- eine mit der Decodier-/Codiereinheit 112 gekoppelte Überwachungs- und Steuerungsanweisungs-Erzeugungseinheit 113.

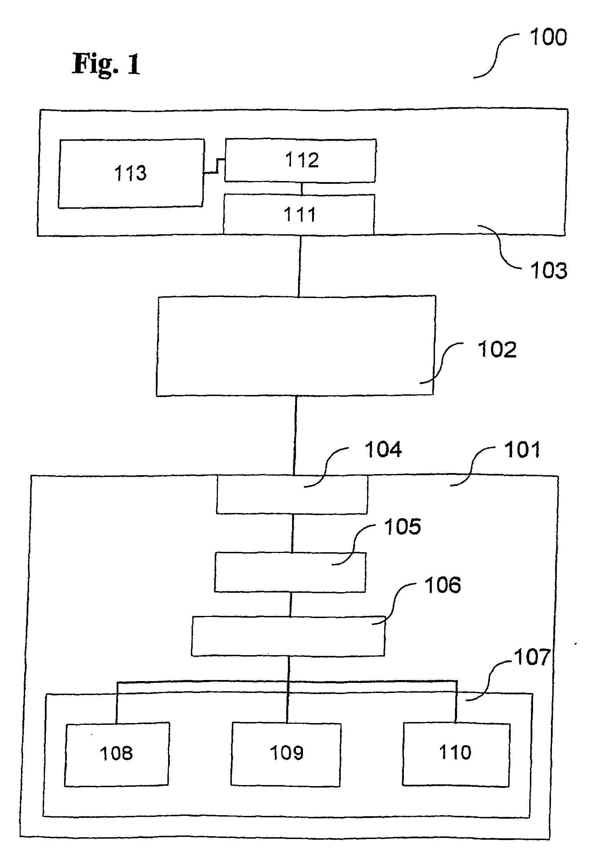

Im Weiteren wird der Ablauf eines Drucks gemäß diesem Ausführungsbeispiel der Erfindung unter Bezugnahme auf Fig. 1 erläutert.

Zu druckende Druckdaten werden von dem Steuerrechner 103 erzeugt, von der Decodier-/Codiereinheit 112 gemäß den TCP/IP-Protokollen zu einer oder mehreren Druckdaten-Nachrichten codiert und mittels der Sende-/Empfangseinheit 111 des Steuerrechners 103 an das Kommunikationsnetz 102 gesendet und somit zu dem Drucker 101 auf Empfängerseite übertragen.

Von der Sende-/Empfangseinheit 104 werden die codierten Druckdaten-Nachrichten empfangen und von der Decodier/Codiereinheit 105 des Druckers 101 decodiert, womit die zu druckenden Druckdaten ermittelt werden.

Anschließend wird zumindest ein Teil der zu druckenden Druckdaten auf ein in den Drucker 101 geführtes Druckmedium gedruckt.

Zumindest ein Teil der auf das Druckmedium gedruckten Information sowie Information über den Druckvorgang selbst werden mittels der Sensoren 108, 109, 110 der Sensoranordnung 107 erfasst, einer Signalverarbeitung unterzogen und der Steuereinheit 106 zugeführt. Die auf diese Weise ermittelten Druckparameter werden der Decodier-/Codiereinheit 105 des Druckers 101 zugeführt, von welcher die Druckparameter codiert werden zu einer Druckparameter-Nachricht, die mittels der Sende-/Empfangseinheit 104 des Druckers 101 an das Kommunikationsnetz 102 gesendet und somit zu dem Steuerrechner 103 übertragen werden.

Nach Empfang der Druckparameter-Nachricht durch den Steuerrechner 103 wird die Druckparameter-Nachricht decodiert und die Druckparameter werden ermittelt und analysiert, d.h. ausgewertet, gemäß diesem Ausführungsbeispiel mittels eines Vergleichs mit einem oder mehreren Soll-Werten zu dem jeweils berücksichtigten Druckparameter.

Abhängig von dem Analyseergebnis, d.h. im einfachen Fall abhängig von dem Vergleichsergebnis, wird von der Überwachungs- und Steuerungsanweisungs-Erzeugungseinheit 113 eine Steuerungsanweisung erzeugt, die anschaulich einen Befehl zum Ansteuern des Druckers 101 darstellt.

Die Steuerungsanweisung wird der Decodier-/Codiereinheit 112 zugeführt, von der sie zu einer Steuerungsanweisungs-Nachricht codiert wird. Die Steuerungsanweisungs-Nachricht wird mittels der Sende-/Empfangseinheit 111 des Steuerrechners 103 an das Kommunikationsnetz 102 gesendet und somit zu dem Drucker 101 übertragen.

Die empfangene Steuerungsanweisungs-Nachricht wird mittels der Decodier-/Codiereinheit 105 des Druckers 101 decodiert und die ermittelte Steuerungsanweisung wird der Steuerungseinheit 106 des Druckers 101 zugeführt.

Die Steuerungseinheit 106 wiederum steuert den Drucker 101 abhängig von der empfangenen Steuerungsanweisung.

Der Soll-Wert, bzw. die mehreren Soll-Werte zu dem Druckparameter, werden dadurch ermittelt, daß die von der Steuerungsanordnung 103 zu dem Drucker 101 übertragenen digitalen Daten bereits vor ihrer Übermittlung zum Drucker 101 mittels eines weiteren Druckers (in Fig. 1 nicht dargestellt) ausgedruckt werden, wie im folgenden näher erläutert wird. Dieser weitere Drucker befindet sich in Bezug auf das Kommunikationsnetz 102 auf der Seite des Senders, d.h. der Steuerungsanordnung 103.

Das so auf der Seite des Senders erzeugte Druckbild kann beispielsweise vor der Übertragung der Druckdaten mit einem handelsüblichen Farbmeßgerät, vorzugsweise einem Spektralphotometer, vermessen und anschließend in das über das Kommunikationsnetz 102 versendbare Datenformat konvertiert werden, insbesondere beispielsweise gemäß einem vorgegebenen Kommunikationsprotokoll, vorzugsweise gemäß dem Transport Control Protocol (TCP) und/oder dem Internet Protocol (IP) codiert werden.

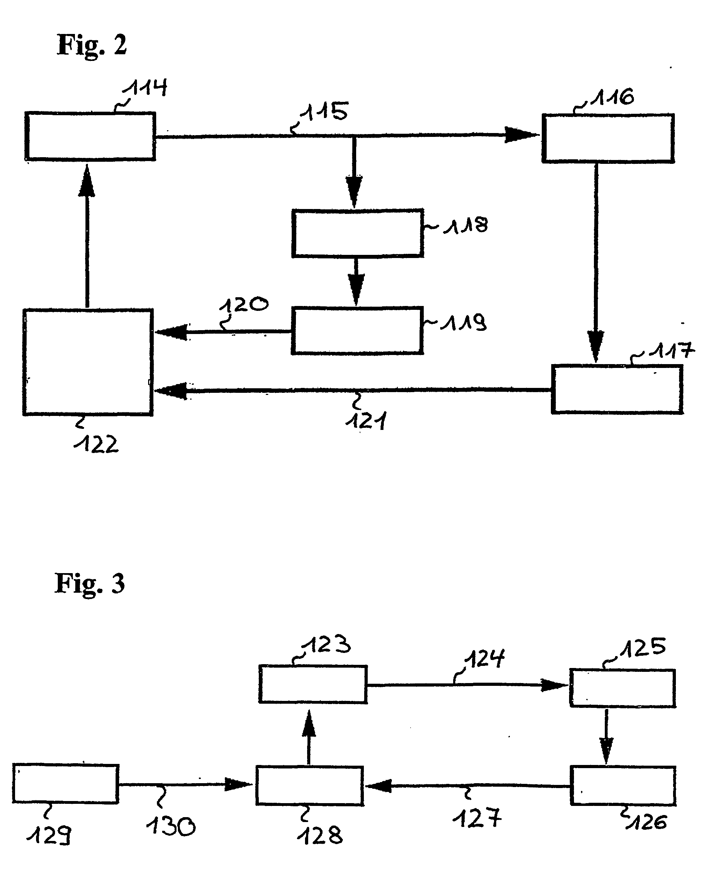

Hierzu wird vorzugsweise ein gemäß Fig. 2 dargestelltes, bevorzugtes Ausführungsbeispiel eines Drucksystems verwendet.

Gemäß Fig. 2 überträgt ein Sender 114, der insbesondere eine Steuerungsanordnung entsprechend der Steuerungsanordnung 103 aus Fig. 1 aufweisen kann, digitale Druckdaten 115 über ein Kommunikationsnetz (nicht dargestellt) an einen Empfänger 116, beispielsweise in Form des Druckers 101 aus Fig. 1. Beim Empfänger 116 werden die empfangenen Druckdaten 115 ausgedruckt. Der erzeugte Ausdruck wird durch eine mittels einer Steuereinheit überwachte Sensoranordnung 117 ausgewertet, die analog zu der von der Steuerungseinheit 106 überwachten Sensoranordnung 107 aus Fig. 1 ausgebildet sein kann, wobei analog zu der in Fig. 1 dargestellten Ausführungsform ein Druckparameter erzeugt wird.

Parallel zu der Übertragung der Druckdaten 115 vom Sender 114 zum Empfänger 116 werden diese gemäß Fig. 2 an einen weiteren Drucker 118 übertragen, der ebenfalls an eine mittels einer Steuereinheit überwachte Sensoranordnung 119 gekoppelt ist. Der weitere Drucker 118 ist in Bezug auf das Kommunikationsnetz vorzugsweise auf Seite des Senders 114 angeordnet.

Die Sensoranordnungen 117, 119 weisen vorzugsweise analog zu der in Fig. 1 dargestellten Ausführungsform einen Drehgeber zum Ermitteln der Transportgeschwindigkeit, Transportrichtung und/oder Transportstrecke des Druckmediums in dem jeweiligen Drucker 116 bzw. 118, einen Farbsensor sowie einen Bildsensor auf. Als Farbsensor wird vorzugsweise ein spektralphotometrisch arbeitender Farbsensor verwendet. Mittels der Sensoranordnungen 117, 119 wird analog zu der in Fig. 1 dargestellten Ausführungsform eine Auswertung der von dem jeweiligen Drucker 116 bzw. 118 gelieferten Druckbilder unter Erzeugung entsprechender Sensordaten 120 bzw. 121 durchgeführt.

Diese Sensordaten 120 bzw. 121 werden gemäß Fig. 2 einer Vergleichseinheit 122 zugeführt, die in Bezug auf das Sender 114 und Empfänger 116 verbindende Kommunikationsnetz entweder auf Seiten des Senders 114 oder auf Seiten des Empfängers 116 angeordnet sein kann. Auf diese Weise wird ein Vergleich des auf Empfängerseite erzeugten Druckergebnisses mit dem auf Senderseite vorliegenden Druckergebnis durchgeführt, so daß das Vergleichsergebnis dem Sender zur Verfügung steht. Die von der Sensoranordnung 119 auf Senderseite ermittelten Sensordaten 120 können hierbei als Soll-Werte für den Vergleich des Ausdrucks auf Empfängerseite mit dem Ausdruck auf Senderseite, d.h. für einen Vergleich der auf Sender- und Empfängerseite ermittelten Druckparameter, verwendet werden.

Im Einzelnen können diese Soll-Werte für einen zur Überwachung des auf Empfängerseite ermittelten Druckparameters durchzuführenden Vergleich mit diesem Druckparameter wie folgt bestimmt werden:

Die Sollwerte bezüglich der Richtung und der Geschwindigkeit des Transports von Druckmedium in dem Drucker 116 werden vorzugsweise entsprechend dem benutzten Drucksystem bei der Konstruktion oder der Parametrisierung der Sensoreinheit festgelegt. Es ist zu diesem Zeitpunkt bereits bekannt, in welche Richtung sich der Bedruckstoff mit welcher Geschwindigkeit bewegen muß.

Die Soll-Werte bezüglich der farbmetrischen Übereinstimmung der zu überwachenden farbmetrischen Druckparameter werden vorzugsweise dadurch ermittelt, daß die zu übertragenden digitalen Daten beim Sender 114, bzw. bei der Steuerungsanordnung 103, vor der Übertragung beispielsweise auf einem Tintenstrahldrucksystem ausgedruckt werden. Hierzu weist das Drucksystem 100 vorzugsweise auf Senderseite ebensolche Sensoren 108-110 auf wie auf der Empfängerseite. Vor der Versendung zum Empfänger wird das zu versendende Dokument also auf der Senderseite ausgedruckt, um auf diese Weise die Druckparameter zu ermitteln. Die Daten werden hierzu wie oben beschrieben ausgedruckt und mit einem handelsüblichen Farbmeßgerät, vorzugsweise einem Spektralphotometer vermessen und anschließend in das versendbare Datenformat konvertiert.

Die Soll-Werte bezüglich der Homogenität des Ausdrucks werden vorzugsweise durch eine Definition des Sollzustands festgelegt. Als Sollzustand wird vorzugsweise eine glatte Fläche im Testmuster verwendet, welche nicht durch weiße Linien, die durch fehlende oder außer Betrieb befindliche Düsen hervorgerufen sein können, unterbrochen wird. Gemäß einer weiteren bevorzugten Ausführungsform wird ein Testmuster anhand von Linien definiert, welche eindeutig den einzelnen Düsen eines Tintenstrahldruckers zugeordnet sind. Dieses Testmuster wird dann beispielsweise durch eine Bildverarbeitungseinheit auf das Vorhandensein der erwarteten Linien untersucht.

Die in Fig. 3 dargestellte Ausführungsform eines Drucksystems entspricht insoweit dem in Fig. 2 dargestellten Drucksystem, als von einem Sender 123 Druckdaten 124 an einen Empfänger 125 übermittelt und anhand eines auf Empfängerseite erzeugten Ausdrucks mittels einer Sensoranordnung 126, die wiederum von einer Steuereinheit überwacht wird, Sensordaten 127 an eine Vergleichseinheit 128 übermittelt werden. Die für den Vergleich erforderlichen Sollwerte hinsichtlich der farblichen Übereinstimmung werden jedoch von einer Druckmaschine 129 erhalten, die entsprechende Farbmesswerte an die Vergleichseinheit 128 liefert.

Wenn es sich bei dem Drucker um ein System handelt, welches zu Proofzwecken verwendet wird, d.h. um den Druck auf einer Druckmaschine zu simulieren, wird der Soll-Wert bezüglich der farblichen Übereinstimmung vorzugsweise gemäß Fig. 3 direkt aus dem farblichen Verhalten dieser Druckmaschine bestimmt. Das farbliche Verhalten eine Druckmaschine kann in bekannter Weise in einem sogenannten ICC-Farbprofil erfaßt werden (ICC - International Color Consortium), indem beispielsweise eine IT8/7.3 Testform nach ISO/DIS 12640, welche auf dieser Druckmaschine gedruckt wurde, farblich vermessen wird. Ein solches Profil ermöglicht es, die farblichen Ergebnisse zu ermitteln, die bei Einsatz bestimmter Kombinationen von Druckfarben auf dieser Druckmaschine erzielt würden. Mit Hilfe eines solchen Profils lassen sich daher auch diejenigen farbmetrischen Werte ermitteln, die bei der Simulation dieser Druckmaschine auf einem Tintenstrahldrucksystem erzielt werden müssen. Diese farbmetrischen Werte können dann als Sollwerte bezüglich der farbmetrischen Übereinstimmung dienen. Das Blockdiagramm eines entsprechenden Drucksystems ist in Fig. 3 schematisch dargestellt.

## Patentansprüche

1. Verfahren zum Überwachen von mindestens einem Druckparameter eines ersten Druckers (101), wobei der Druckparameter den Druck des ersten Druckers (101) charakterisiert,
• bei dem der Druckparameter erfasst wird,
• bei dem der erfasste Druckparameter codiert wird zu einer Druckparameter-Nachricht,
• bei dem die Druckparameter-Nachricht zu einer Steuerungsanordnung (103) über ein Kommunikationsnetz übertragen wird,
• bei dem von der Steuerungsanordnung (103) die Druckparameter-Nachricht decodiert wird, womit der Druckparameter ermittelt wird, und
• bei dem der Druckparameter von der Steuerungsanordnung (103) überwacht wird,
• wobei der durch den Druckparameter charakterisierte Druck des ersten Druckers (101) aufgrund von Druckdaten (115) erfolgt, die von einer Sendeanordnung (114) über das Kommunikationssystem an den ersten Drucker (101) übertragen wurden,
• **dadurch gekennzeichnet, daß** die Druckdaten (115) vor der Übertragung an den ersten Drucker (101) mittels eines zweiten Druckers (118) ausgedruckt werden, der an eine mittels einer Steuereinheit überwachte Sensoranordnung (119) zum Ermitteln von Soll-Werten anhand des von dem zweiten Drucker (118) erzeugten Ausdrucks gekoppelt ist, wobei anhand dieses Ausdrucks ein vorgegebenes Kriterium für den Vergleich des Druckparameter bestimmt wird.

2. Verfahren nach Anspruch 1,
• bei dem abhängig von dem Druckparameter von der Steuerungsanordnung (103.) eine Steuerungsanweisung erzeugt wird zum Steuern des ersten Druckers (101),
• bei dem die Steuerungsanweisung codiert wird zu einer Steuerungsanweisungs-Nachricht,
• bei dem die Steuerungsanweisungs-Nachricht über das Kommunikationsnetz zu dem ersten Drucker (101) übertragen wird, und
• bei dem von dem ersten Drucker (101) die empfangene Steuerungsanweisungs-Nachricht decodiert wird, womit die Steuerungsanweisung ermittelt wird, und
• bei dem der erste Drucker (101) gemäß der Steuerungsanweisung gesteuert wird.

3. Verfahren nach Anspruch 2,
• bei dem der Druckparameter verglichen wird mit einem vorgegebenen Kriterium, und
• bei dem die Steuerungsanweisung erzeugt wird abhängig von dem Vergleichsergebnis.

4. Verfahren nach einem der Ansprüche 1 bis 3, wobei die Sendeanordnung (114) die Steuerungsanordnung aufweist.

5. Verfahren nach Anspruch 3 oder 4,
bei dem das vorgegebene Kriterium von wenigstens einem Soll-Wert abhängt, der aus der folgenden Gruppe ausgewählt wird:
- ein Transport-Soll-Wert bezüglich der Geschwindigkeit und/oder des Transports des Druckmaterials in dem ersten Drucker (101);
- ein Farb-Soll-Wert bezüglich der farbmetrischen Übereinstimmung der Farbwiedergabe auf dem Druckmaterial mit einer vorgegebenen Soll-Wiedergabe; und
- ein Homogenitäts-Soll-Wert bezüglich der Homogenität der ausgedruckten Information.

6. Verfahren nach einem der Ansprüche 3 bis 5, bei dem der Vergleich des Druckparameters mit einem vorgegebenen Kriterium von der Steuerungsanordnung (103) durchgeführt wird.

7. Verfahren nach einem der Ansprüche 1 bis 6, bei dem als Druckparameter zumindest einer der folgenden Parameter erfasst wird:
• das Vorhandensein von Druckmaterial in dem ersten Drucker (101);
• die Geschwindigkeit und/oder die Richtung des Transports des Druckmaterials in dem ersten Drucker (101);
• die ausreichende Übereinstimmung der Farbwiedergabe auf dem Druckmaterial mit einer vorgegebenen Soll-Farbwiedergabe;
• die Homogenität der ausgedruckten Information, und/oder
• ein aus zumindest einem der oben aufgeführten Parameter ermittelter Druckparameter.

8. Verfahren nach einem der Ansprüche 1 bis 7, bei dem der erfasste Druckparameter gemäß einem Kommunikationsprotokoll codiert wird.

9. Verfahren nach einem der Ansprüche 1 bis 8, bei dem die codierte Information über das Internet/Intranet als Kommunikationsnetz übertragen wird.

10. Drucksystem (100),
mit einer Steuerungsanordnung (103) und mindestens einem ersten Drucker (101), die über ein Kommunikationsnetz (102) miteinander verbunden sind, bei dem der erste Drucker (101) folgende Komponenten aufweist:
• eine Sensoranordnung (107, 117) mit mindestens einem Sensor (108-110) zum Erfassen mindestens eines Druckparameters,
• eine mit der Sensoranordnung (107,117) gekoppelte Codiereinheit (105) zum Codieren des Druckparameters zu einer Druckparameter-Nachricht,
• eine Daten-Sendeeinheit (104), die mit dem Kommunikationsnetz (102) verbunden ist, zum Senden der Druckparameter-Nachricht,
• bei dem die Steuerungsanordnung (103) folgende Komponenten aufweist:
• eine Daten-Empfangseinheit (111), die mit dem Kommunikationsnetz (102) verbunden ist, zum Empfangen der Druckparameter-Nachricht,
• eine Decodiereinheit (112) zum Decodieren der Druckparameter-Nachricht,
• eine mit der Decodiereinheit gekoppelte Druckparameter-Überwachungseinheit zum Überwachen des empfangenen Druckparameters;
• **dadurch gekennzeichnet, daß** das Drucksystem (100) einen zweiten Drucker (118) zum Ausdrucken der von einer Sendeanordnung zum ersten Drucker (101) übertragenen Druckdaten (115) vor deren Übertragung über das Kommunikationsnetz (102) und eine weitere Sensoranordnung (119) zum Ermitteln von Soll-Werten anhand des von dem zweiten Drucker (118) erzeugten Ausdrucks aufweist.

11. Drucksystem nach Anspruch 10,
bei dem die Steuerungsanordnung (103) folgende Komponenten aufweist:
• eine Steuerungsanweisungs-Erzeugungseinheit (113), mit der abhängig von mindestens einem empfangenen Druckparameter eine Steuerungsanweisung erzeugt wird zum Steuern des ersten Druckers (101),
• wobei die Codiereinheit (105) eingerichtet ist zum Codieren einer Steuerungsanweisungs-Nachricht aus der Steuerungsanweisung, und
• eine Daten-Sendeanordnung (114), die mit dem Kommunikationsnetz (102) verbunden ist, zum Senden der Steuerungsanweisungs-Nachricht.

12. Drucksystem nach Anspruch 11, wobei die Sendeanordnung (114) die Steuerungsanordnung aufweist.

13. Drucksystem nach einem der Ansprüche 10 bis 12, wobei eine Vergleichseinheit (122) zum Vergleichen der Soll-Werte mit dem Druckparameter vorgesehen ist.

14. Drucksystem nach einem der Ansprüche 10 bis 13, bei dem der erste Drucker (101) folgende Komponenten aufweist:
• eine Daten-Empfangseinheit (104), die mit dem Kommunikationsnetz (102) verbunden ist, zum Empfangen der Steuerungsanweisungs-Nachricht,
• wobei die Decodiereinheit (112) eingerichtet ist zu Decodieren der Steuerungsanweisungs-Nachricht zu der Steuerungsanweisung, und
• eine Drucker-Steuerungseinheit (106) zum Steuern des ersten Druckers (101) abhängig von der Steuerungsanweisung.

15. Drucksystem nach einem der Ansprüche 10 bis 14,
mit einer Drucker-Steuerungseinheit (106) zum Steuern des ersten Druckers (101) gemäß einem vorgegebenen Steuerungsablauf.

16. Drucksystem nach einem der Ansprüche 10 bis 15, mit einer Sensor-Steuerungseinheit zum Steuern der Sensoranordnung (107) gemäß einem vorgegebenen Steuerungsablauf.

17. Drucksystem nach einem der Ansprüche 10 bis 16, bei dem die Sensoranordnung(en) (107) mindestens einen der folgenden Sensoren aufweist/aufweisen,
• mindestens einen Drehgeber zum Ermitteln der Transportgeschwindigkeit und/oder der Transportrichtung und/oder der Transportstrecke des Druckmediums in dem ersten Drucker (101),
• mindestens einen Farbsensor, und/oder
• mindestens einen Bildsensor.

18. Drucksystem nach einem der Ansprüche 10 bis 17, bei dem die Sensoranordnung (107) mindestens einen spektralphotometrisch arbeitenden Farbsensor aufweist.

## Claims

1. A method of monitoring at least one printing parameter of a first printer (101), the printing parameter **characterizing** the print from the first printer (101),
• in which the printing parameter is registered,
• in which the printing parameter registered is encoded to form a printing parameter message,
• in which the printing parameter message is transmitted to a control arrangement (103) via a communications network,
• in which the printing parameter message is decoded by the control arrangement (103), with which message the printing parameter is determined, and
• in which the printing parameter is monitored by the control arrangement (103),
• the print from the first printer (101), **characterized by** the printing parameter, being carried out on the basis of printing data (115) which have been transmitted to the first printer (101) by a transmitting arrangement (114) via the communications system,
• **characterized in that** said printing data (115) are printed out, before being transmitted to the first printer (101), by means of a second printer (118) being coupled to a sensor arrangement (119), monitored by means of a control unit, for determining desired values by using the printout produced by the second printer (118), wherein, by using this printout, a predetermined criterion is determined for the comparison of the printing parameter.

2. Method according to claim 1,
• in which, depending on the printing parameter, a control instruction is generated by the control arrangement (103) in order to control the first printer (101),
• in which the control instruction is encoded to form a control instruction message,
• in which the control instruction message is transmitted to the first printer (101) via the communications network, and
• in which the control instruction message received is decoded by the first printer (101), with which message the control instruction is determined, and
• in which the first printer (101) is controlled in accordance with the control instruction.

3. Method according to claim 2,
• in which the printing parameter is compared with a predefined criterion, and
• in which the control instruction is generated as a function of the comparison result.

4. Method according to anyone of claims 1 or 3, the transmitting arrangement (114) comprising the control arrangement.

5. Method according to claim 3 or 4, in which the predefined criterion depends on at least one desired value which is selected from the following group:
- a desired transport value with respect to the speed and/or the transport of the printing material in the first printer (101);
- a desired color value with respect to the colorimetric agreement of the color reproduction on the printing material with a predefined desired reproduction; and
- a desired homogeneity value with respect to the homogeneity of the information printed out.

6. Method according to anyone of claims 3 to 5, in which the comparison of the printing parameter with a predefined criterion is carried out by the control arrangement (103).

7. Method according to anyone of claims 1 to 6, in which the printing parameter registered is at least one of the following parameters:
• the presence of printing material in the first printer (101);
• the speed and/or the direction of the transport of the printing material in the first printer (101);
• adequate agreement of the color reproduction on the printing material with a predefined desired color reproduction;
• the homogeneity of the information printed out, and/or
• a printing parameter determined from at least one of the parameters listed above.

8. Method according to anyone of claims 1 to 7, in which the printing parameter registered is encoded in accordance with a communications protocol.

9. Method according to anyone of claims 1 to 8, in which the encoded information is transmitted via the Internet/Intranet as communications network.

10. A printing system (100),
having a control arrangement (103) and at least one first printer (101), which are connected to each other via a communications network (102), in which the first printer (101) comprises the following components:
• a sensor arrangement (107, 117) with at least one sensor (108-110) for registering at least one printing parameter,
• an encoding unit (105) coupled to the sensor arrangement (105, 117) for encoding said printing parameter to form a printing parameter message,
• a data transmitting unit (104), which is connected to the communications network (102), for sending the printing parameter message,
• in which the control arrangement (103) comprises the following components:
• a data receiving unit (111), which is connected to the communications network (102), for receiving the printing parameter message,
• a decoding unit (112) for decoding the printing parameter message,
• a printing parameter monitoring unit, coupled to the decoding unit, for monitoring the printing parameter received,
• **characterized in that** said printing system comprises a second printer (118) for printing out the printing data (115) transmitted to the first printer (101) by a transmitting arrangement before it is transmitted via the communications network (102), and a further sensor arrangement (119) for determining desired values by using the printout produced by said second printer (118).

11. Printing system according to claim 10, in which the control arrangement (103) comprises the following components:
• a control instruction generation unit (113), with which a control instruction is generated as a function of at least one printing parameter received in order to control the first printer (101),
• the encoding unit (105) being set up to encode a control instruction message from the control instruction, and
• a data transmitting arrangement (114), which is connected to the communications network (102), for sending the control instruction message.

12. Printing system according to claim 11, said transmitting arrangement (114) comprising the control arrangement.

13. Printing system according to anyone of claims 10 to 12, a comparison unit (122) for comparing the desired values with the printing parameter being provided.

14. Printing system according to anyone of claims 10 to 13, in which the first printer (101) comprises the following components:
• a data receiving unit (104), which is connected to the communications network (102), for receiving the control instruction message,
• the decoding unit (112) being set up to decode the control instruction message to the control instruction, and
• a printer control unit (106) for controlling the first printer (101) as a function of the control instruction.

15. Printing system according to anyone of claims 10 to 14, with a printer control unit (106) for controlling the first printer (101) in accordance with a predefined control sequence.

16. Printing system according to anyone of claims 10 to 15, further comprising a sensor control unit for controlling the sensor arrangement (107) in accordance with a predefined control sequence.

17. Printing system according to anyone of claims 10 to 16, in which the sensor arrangement(s) (107) comprises/comprise at least one of the following sensors,
• at least one rotary encoder for determining the transport speed and/or the transport direction and/or the transport distance of the printing medium in the first printer (101),
• at least one color sensor, and/or
• at least one image sensor.

18. Printing system according to anyone of claims 10 to 17, in which the sensor arrangement (107) comprises at least one color sensor operating spectrophotometrically.

## Revendications

1. Procédé pour contrôler au moins un paramètre d'impression d'une première imprimante (101), le paramètre d'impression caractérisant l'impression de la première imprimante (101),
• selon lequel le paramètre d'impression est détecté,
• selon lequel le paramètre d'impression détecté est codé pour former un message du paramètre d'impression,
• selon lequel le message du paramètre d'impression est transmise à un dispositif de commande (103) par l'intermédiaire d'un réseau de communication,
• selon lequel le message du paramètre d'impression est décodé par le dispositif de commande (103), ce qui permet de déterminer le paramètre d'impression, et
• selon lequel le paramètre d'impression est surveillé par le dispositif de commande (103),
• selon lequel l'impression, **caractérisée par** le paramètre d'impression, de la première imprimante (101) s'effectue sur la base de données d'impression (115), qui ont été transmises par un dispositif d'émission (114) à la première imprimante (101) par l'intermédiaire du réseau de communication,
• **caractérisé en ce que** les données d'impression (115) sont sortie sous forme imprimée, avant la transmission à la première imprimante (101), au moyen d'une seconde imprimante (118), qui est couplée à un dispositif de détection (119), qui est surveillé au moyen d'une unité de commande et sert à déterminer des valeurs de consigne sur la base de la sortie imprimée produite par la seconde imprimante (118), un critère prédéterminé pour la comparaison du paramètre d'impression étant déterminé sur la base de cette sortie imprimée.

2. Procédé selon la revendication 1,
• selon lequel une instruction de commande est produite par le dispositif de commande (103) en fonction du paramètre d'impression et pour la commande de la première imprimante (101),
• selon lequel l'instruction de commande est codée pour former un message d'instruction de commande, et
• selon lequel le message d'instruction de commande est transmis à la première imprimante (101) par l'intermédiaire du réseau de communication, et
• selon lequel le message d'instruction de commande reçu est décodé par la première imprimante (101), ce qui permet de déterminer l'instruction de commande, et
• selon lequel la première imprimante (101) est commandée en fonction de l'instruction de commande.

3. Procédé selon la revendication 2,
• selon lequel le paramètre d'impression est comparé à un critère prédéterminé, et
• selon lequel l'instruction de commande est produite en fonction du résultat de la comparaison.

4. Procédé selon l'une des revendications 1 à 3, selon lequel le dispositif d'émission (114) comporte le dispositif de commande.

5. Procédé selon la revendication 3 ou 4, selon lequel le critère prédéterminé dépend d'au moins une valeur de consigne, qui est sélectionnée parmi le groupe suivant:
- une valeur de consigne de transport qui concerne la vitesse et/ou le transport du matériau d'impression dans la première imprimante (101),
- une valeur de consigne de couleur qui concerne la concordance colorimétrique de la reproduction en couleurs sur le matériau d'impression avec une reproduction de consigne prédéterminée; et
- la valeur de consigne d'homogénéité en ce qui concerne l'homogénéité de l'information imprimée.

6. Procédé selon l'une des revendications 3 à 5, selon lequel la comparaison du paramètre d'impression à un critère prédéterminé est réalisée par le dispositif de commande (103).

7. Procédé selon l'une des revendications 1 à 6, selon lequel au moins l'une des paramètres suivants est détecté en tant que paramètre d'impression:
• la présence d'un matériau d'impression dans la première imprimante (101);
• la vitesse et/ou la direction du transport du matériau d'impression dans la première imprimante (101);
• la concordance suffisante entre la reproduction en couleurs sur le matériau d'impression et une reproduction en couleurs de consigne prédéterminée;
• l'homogénéité de l'information imprimée, et/ou
• un paramètre d'impression déterminé à partir d'au moins l'un des paramètres indiqués plus haut.

8. Procédé selon l'une des revendications 1 à 7, selon lequel le paramètre d'impression détecté est codé conformément à un protocole de communication.

9. Procédé selon l'une des revendications 1 à 8, selon lequel l'information codée est transmise par l'intermédiaire du réseau Internet ou Intranet en tant que réseau de communication.

10. Système d'impression (100),
comportant un dispositif de commande (103) et au moins une première imprimante (101), qui sont reliés entre eux par l'intermédiaire d'un réseau de communication (102), et dans lequel la première imprimante (101) comporte les composants suivants:
• un dispositif de détection (107, 117) comportant au moins un capteur (108- 110) pour détecter au moins un paramètre d'impression,
• une unité de codage (105) couplée au dispositif de détection (107, 117) pour coder le paramètre d'impression pour obtenir un message du paramètre d'impression,
• une unité d'émission de données (104), qui est reliée au réseau de communication (102) pour l'émission du message concernant le paramètre d'impression,
• selon lequel le dispositif de commande (103) comporte les composants suivants:
• une unité (111) de réception de données, qui est reliée au réseau de communication (102) pour recevoir le message du paramètre d'impression,
• une unité de décodage (112) pour décoder le message du paramètre d'impression,
• une unité de contrôle du paramètre d'impression, qui est couplée à l'unité de décodage, pour surveiller le paramètre d'impression reçu;
• **caractérisé en ce que** le système d'impression (100) comporte une seconde imprimante (118) pour imprimer les données d'impression (115) transmises par un dispositif d'émission à la première imprimante (101), avant la transmission de ces données par l'intermédiaire du réseau de communication (102), et un autre dispositif de détection (110) pour déterminer les valeurs de consigne sur la base de l'impression produite par la seconde imprimante (118).

11. Système d'impression selon la revendication 10,
dans lequel le dispositif de contrôle (103) comporte les composants suivants:
• une unité (113) de détection d'instruction de commande, au moyen de laquelle l'instruction de commande est produite en fonction d'au moins un paramètre d'impression reçu, pour la commande de la première imprimante (101),
• l'unité de codage (105) étant agencée de manière à coder un message d'instruction de commande à partir de l'instruction de commande, et
• un dispositif d'émission de données (114), qui est relié au réseau de communication (102), pour l'émission du message d'instruction de commande.

12. Système d'impression selon la revendication 11, dans lequel le dispositif de détection (114) comprend le dispositif de commande.

13. Système d'impression selon l'une des revendications 10 à 12, dans lequel il est prévu une unité de comparaison (122) pour comparer les valeurs de consigne au paramètre d'impression.

14. Système d'impression selon l'une des revendications 10 à 13, dans lequel la première imprimante (101) comporte les composants suivants:
• une unité de réception de données (104), qui est reliée au réseau de communication (102), pour la réception du message d'instruction de commande,
• l'unité de décodage (112) étant agencée de manière à décoder le message d'instruction de commande pour former l'instruction de commande, et
• une unité de commande d'imprimante (106) pour commander la première imprimante (101) en fonction de l'instruction de commande.

15. Système d'impression selon l'une des revendications 10 à 14, comportant une unité (106) de commande d'imprimante pour commander la première imprimante (101) conformément à un déroulement de commande prédéterminé.

16. Système d'impression selon l'une des revendications 10 à 15, comportant une unité de commande de capteur pour commander le dispositif de détection (107) conformément à un déroulement de commande prédéterminé.

17. Système d'impression selon l'une des revendications 10 à 16, dans lequel le ou les dispositifs de détection (107) comportent au moins l'un des capteurs suivants:
• au moins un capteur de rotation servant à déterminer la vitesse de transport et/ou la direction de transport et/ou le trajet de transport du milieu d'impression dans la première imprimante (101),
• au moins un détecteur de couleur, et/ou
• au moins un détecteur d'images.

18. Système d'impression selon l'une des revendications 10 à 17, selon lequel le dispositif de détection (107) comprend au moins un détecteur de couleur travaillant de façon spectrophotométrique.
